# EUROPEAN PATENT APPLICATION

(11) **EP 4 670 499 A1**
(43) Date of publication of application: **31.12.2025**
(21) Application number: 24760254.3
(22) Date of filing: 16.02.2024
(51) Int. Cl.: A01K 43/00, B07C 5/02

(54) **EGG SUPPLY SYSTEM**

(30) Priority: 20.02.2023 JP 2023024248
(71) Applicant: Nabel Co., Ltd., Kyoto-shi, Kyoto 601-8444 (JP)
(72) Inventor: ISHII, Toshiyuki, Kyoto-shi, Kyoto 601-8444 (JP)
(74) Representative: Müller Hoffmann & Partner
(86) International application number: PCT/JP2024/005419
(87) International publication number: WO 2024/176954

(57) **Abstract**

The present invention alleviates the burden on an operator while preventing any decrease in production efficiency, and is an egg supply system 100 that supplies eggs E to an egg conveyor unit 11 which conveys the eggs E to a sorting apparatus 10, and that has a tray supply unit 2 that supplies a tray T holding a plurality of eggs E to a subsequent step, an egg supply unit 3 that supplies eggs E from the tray T supplied by the tray supply unit 2 to the egg conveyor unit 11, a final tray notification unit 5 that gives notification that the tray T supplied from the tray supply unit 2 is a final tray T_{F} of a current lot, and a control device 4 that, in a case in which the final tray notification unit 5 has given notification that a tray T is the final tray T_{F} of the current lot, receives that notification signal, and then ensures that a predetermined space is provided between the eggs E of the current lot supplied to the egg conveyor unit 11 and the eggs E of the subsequent lot supplied thereto.

## Description

### [Technical Field]

The present invention relates to an egg supply system that supplies eggs, for example, to a sorting apparatus.

### [Background Art]

In a sorting apparatus that sorts eggs according to their grade, once eggs have been processed they are tallied according to lot. Because of this, when the egg lot being supplied to the sorting apparatus is switched to another egg lot, in order to differentiate between the respective lots, it is necessary that a required space be provided between each lot that is supplied to the sorting apparatus.

In addition, heretofore, a command to switch lots was made to a sorting apparatus via manual input by an operator in which the operator actuated a switching button provided on the sorting apparatus. Moreover, the space between the lots supplied to the sorting apparatus was provided by operating the supply apparatus supplying the eggs to the sorting apparatus.

However, because a command to switch lots is input via an operator actuating a switching button, it is necessary that the operator track the location of the tail end of the lot currently being processed, so that the operator is not able to leave the sorting apparatus unattended. Moreover, in a case in which the operator actuates the switching button too early or too late, there is a possibility that the eggs of the previous lot will get mixed up with the eggs of the following lot, or vice-versa. Furthermore, because the operation of the supply apparatus to ensure that a space is provided between lots is performed manually, there are instances in which the necessary space is not secured so that the aggregated data becomes mixed up, or in which the space is too large so that an unnecessary wait time is generated.

### [Citation List]

### [Patent Literature]

[PTL 1] Japanese Patent Application Laid-Open (JP-A) No. 2016-097989

### [Summary of Invention]

### [Technical Problem]

The present invention was therefore conceived in order to solve the above-described problems, and it is an object thereof to enable the burden on an operator to be alleviated and to ensure that eggs do not become mixed up between lots.

### [Solution to Problem]

In other words, an egg supply system according to the present invention is an egg supply system that supplies eggs to an egg conveyor unit which conveys the eggs to a sorting apparatus, and that is characterized in being provided with a tray supply unit that supplies a tray holding a plurality of eggs to a subsequent step, an egg supply unit that supplies eggs from the tray supplied by the tray supply unit to the egg conveyor unit, a final tray notification unit that gives notification that the tray supplied from the tray supply unit is a final tray of a current lot, and a control device that, in a case in which the final tray notification unit has given notification that a tray is the final tray of the current lot, receives that notification signal, and then ensures that a predetermined space is provided between the eggs of the current lot supplied to the egg conveyor unit and the eggs of the subsequent lot supplied thereto.

According to this egg supply system, simply by the final tray notification unit giving notification that a tray is the final tray of the current lot, it is possible for a space to be provided between lots automatically by the control device so as to differentiate between the respective lots, and not only can the burden on an operator be alleviated, but it is also possible to ensure that eggs do not become mixed up between lots.

It is desirable that the above-described control device have an operation stopping unit that, after the final tray has been supplied from the tray supply unit, causes the operation performed by the tray supply unit to supply a tray for the subsequent lot to be stopped.

If this type of structure is adopted, then simply by stopping the operation of the tray supply unit, it is possible to provide a predetermined space between the final tray of the current lot supplied to the egg supply unit and the tray of the subsequent lot supplied thereto. As a result, it is possible to provide a space between lots in the egg conveyor unit.

It is desirable that the control device have an end signal transmitting unit that transmits an egg supply end signal which shows that the supplying of eggs from the current lot to the egg conveyor unit has ended to the sorting apparatus.

If this type of structure is adopted, then it is possible for a sorting apparatus to automatically recognize the end of the current lot and the beginning of the subsequent lot, and it is thereby possible to alleviate the burden on an operator of inputting a lot switching command or the like while the operator is performing tallying processing.

### [Advantageous Effects of the Invention]

According to the present invention which is formed in the manner described above, it is possible to enable the burden on an operator to be alleviated and to ensure that eggs do not become mixed up between lots.

### [Brief Description of Drawings]

[FIG. 1] FIG. 1 is a plan view schematically showing a structure of an egg supply system according to an embodiment of the present invention.
[FIG. 2] FIG. 2 is a function block diagram of a control device of the same embodiment.
[FIG. 3] FIG. 3 is a schematic view showing a state in which the eggs on a final tray of a current lot are transferred to an egg conveyor unit in the egg supply system of the same embodiment.
[FIG. 4] FIG. 4 is a schematic view showing a state in which a space is provided between the eggs of a current lot and the eggs of a subsequent lot in the egg supply system of the same embodiment.
[FIG. 5] FIG. 5 is a schematic view showing a state in which the eggs of a subsequent lot are stopped immediately in front of distribution gates in the egg supply system of the same embodiment.

### [Description Embodiments]

Hereinafter, an embodiment of an egg supply system according to the present invention will be described with reference to the drawings. Note that, in order to simplify an understanding thereof, each of the drawings depicted below is shown schematically with omissions or enhancements made where these have been deemed appropriate. In addition, component elements that are the same in the respective drawings are indicated by the same descriptive symbols and any duplicated description thereof is omitted.

### [Basic Structure of an Egg Supply System 100]

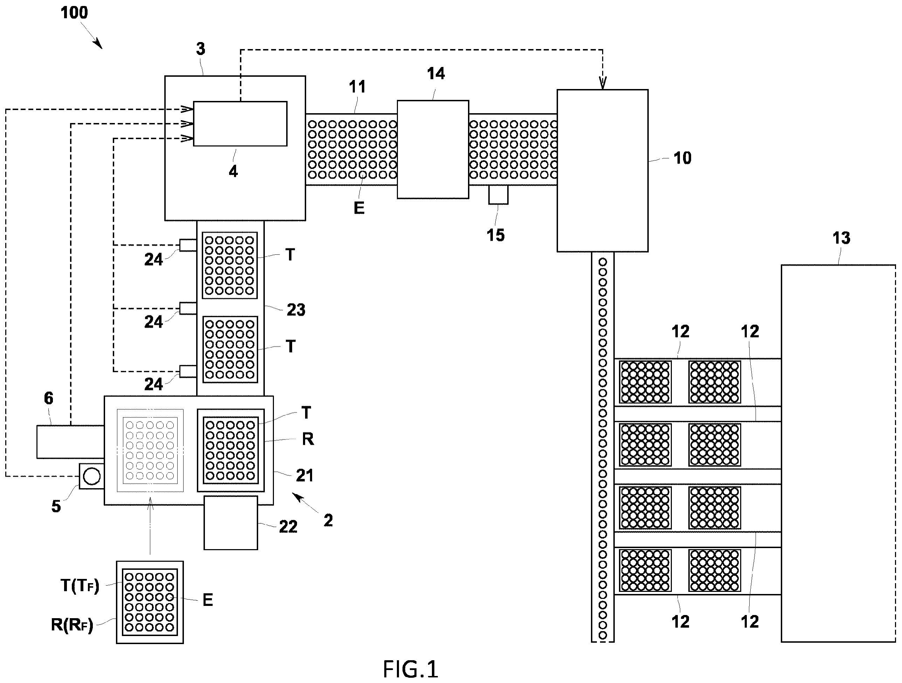

As is shown in FIG. 1, the egg supply system 100 of the present embodiment supplies eggs E to an egg conveyor unit 11 that conveys the eggs E to a sorting apparatus 10. Note that, in the present embodiment, the eggs E that have been sorted according to their grade by the sorting apparatus 10 are distributed to distribution gates 12, and are thereafter stored in an automated warehouse 13 where they undergo inventory management.

More specifically, the egg supply system 100 is provided with a tray supply unit 2 that supplies a tray T which is holding plurality of eggs E to a subsequent step (in this case, a sorting step), an egg supply unit 3 that supplies the eggs E from the tray T supplied by the tray supply unit 2 to the egg conveyor unit 11, and a control device 4 that controls the tray supply unit 2 and the egg supply unit 3 and the like.

The tray supply unit 2 of the present embodiment includes a tray loading portion 21 on which the trays T are loaded, a tray pushing unit 22 that pushes out the trays T that have been loaded on the tray loading portion 21, and a tray conveyor unit 23 that conveys the trays T pushed out by the tray pushing unit 22.

The tray loading portion 21 may be a portion on which is loaded an equipment item R such as an egg distribution cart or pallet which is holding a plurality of trays T, or on which are loaded trays T that are not being held on the equipment item R. Note that the tray loading portion 21 of the present embodiment is a portion on which is loaded the equipment item R which is holding a plurality of trays T.

The tray pushing unit 22 pushes the trays T loaded on the tray loading portion 21 one-by-one towards the tray conveyor unit 23. Here a structure is adopted in which, when a tray T loaded on the equipment item R is to be pushed, the equipment item R is moved upwards or downwards so that the tray T that is to be pushed out from the within the equipment item R is positioned at a height at which it can be transferred onto the tray conveyor unit 23, and this tray T is then pushed out.

The tray conveyor unit 23 is connected to the egg supply unit 3 and conveys the tray T pushed out by the tray pushing unit 22 to the egg supply unit 3. The tray conveyor unit 23 is formed using a conveyor such as, for example a belt conveyor or the like.

The egg supply unit 3 uses, for example, suction or the like to transfer the plurality of eggs E being held on the tray T conveyed by the tray conveyor unit 23 to the egg conveyor unit 11. The egg supply unit 3 shown in FIG. 1 transfers eggs onto an egg conveyor unit 11 that extends orthogonally relative to the tray conveyor unit 23, however, the positional relationship between the tray conveyor unit 23 and the egg conveyor unit 11 is not limited to this, and various other arrangements may also be considered.

Note that the egg conveyor unit 11 is formed using a conveyor such as, for example a roller conveyor or the like. Moreover, an egg washing/drying unit 14 that washes and dries the eggs E is provided in the egg conveyor unit 11. Once the eggs E have transited the egg washing/drying unit 14, they are conveyed to the sorting apparatus 10.

The control device 4 controls the tray supply unit 2 and the egg supply unit 3 and the like so that the operation to supply the eggs E to the egg conveyor unit 11 is performed. The control device 4 of the present embodiment forms part of the egg supply apparatus together with the egg supply unit 3, however, it may also be provided separately from the egg supply unit 3. Moreover, it is also possible for the control unit 4 of the present embodiment to control the egg conveyor unit 11 and the sorting apparatus 10 in addition to the tray supply unit 2 and the egg supply unit 3, and for the control unit 4 to also control operations to store the eggs E in the automated warehouse 13.

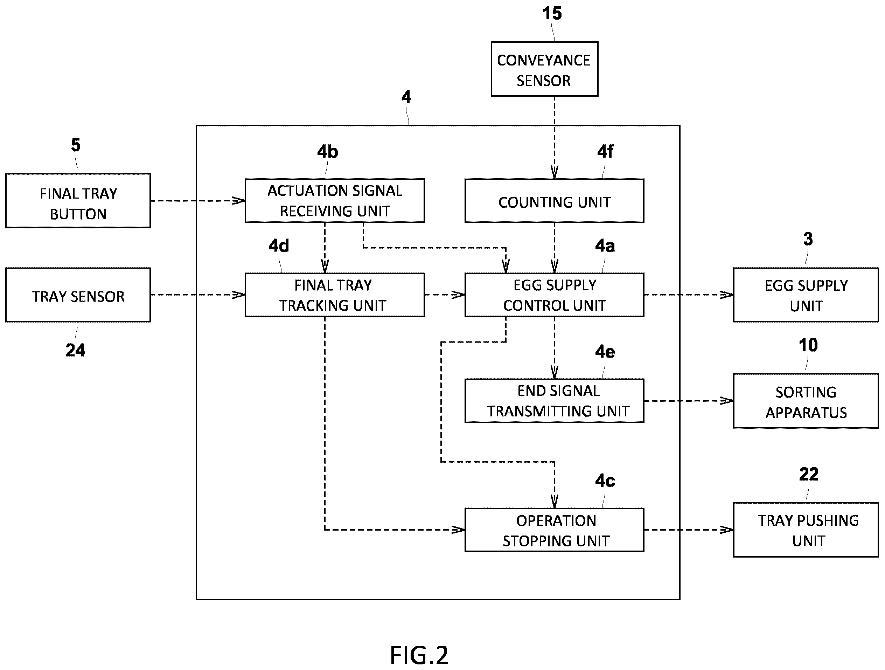

Note that the control device 4 is formed by a computer that is equipped with, for example, a CPU, memory, input/output interfaces, AD converters, and a display device such as a display monitor or the like. As is shown in FIG. 2, as a result of the CPU and peripheral devices operating in mutual collaboration with each other based on a program that is stored in the memory, in addition to performing a function of an egg supply control unit 4a which controls the egg supply unit 3, the control device 4 also performs functions of controlling each unit of the egg supply system 100. Each of these functions of the control device 4 is described below. Note that the control device 4 may be formed by a single physical computer, or may be formed by a plurality of physically separate computers.

In addition, as is shown in FIG. 1, the egg supply system 100 of the present embodiment is provided with a final tray notification unit 5 that gives notification that a tray T supplied from the tray supply unit 2 is a final tray T_{F} of the current lot.

The final tray notification unit 5 of the present embodiment is formed by a final tray button that is actuated in a case in which a tray T supplied from the tray supply unit 2 is the final tray T_{F} of the current lot. This final tray button 5 is actuated by an operator once the final tray T_{F} of the current lot has been loaded on the tray loading portion 21. Note that, in a case in which the equipment item R is loaded on the tray loading portion 21, then the operator actuates the final tray button 5 once the equipment item holding the final tray T_{F} (i.e., a final equipment item R_{F}) has been loaded on the tray loading portion 21.

The final tray button 5 is installed in a location where it can be actuated by an operator immediately before, or immediately after that operator has loaded the final tray T_{F} (or the final equipment item R_{F}). For example, installing the final tray button 5 in the tray loading portion 21 or peripherally thereto may be considered.

In a case in which the final tray button 5 is installed in the tray loading portion 21, it may be installed as an internal part of the tray loading portion 21, or it may be mounted on the exterior of the tray loading portion 21. Moreover, in a case in which the final tray button 5 is installed peripherally to the tray loading portion 21, then installing the final tray button 5 adjacently to the tray loading portion 21 (for example, within a range of 1 meter from the tray loading portion) may be considered.

The final tray button 5 is connected either via wire or wirelessly to the control device 4. When the final tray button 5 is actuated, an actuation signal (i.e., a notification signal) is input into the control device 4, and is received by an actuation signal receiving unit 4b. Note that the actuation signal is a signal for giving notification that a tray is the final tray T_{F} of the current lot.

In addition to this, in the present embodiment, a lot number input device 6 is provided either in the tray loading portion 21 or peripherally thereto. A lot number for a tray T that has been loaded on the tray loading portion 21 is input into this lot number input device 6. Lot number information that is input into the lot number input device 6 is transmitted to the control device 4, and thereafter is used for inventory management and the like.

In a case in which the final tray button 5 is actuated, the control device 4 receives the resulting actuation signal and then controls the tray supply unit 2 and the egg supply unit 3 so that a predetermined space is provided between the eggs E of the current lot being supplied to the egg conveyor unit 11 and the eggs E of the subsequent lot supplied thereto.

More specifically, the control device 4 has an operation stopping unit 4c that, after the final tray T_{F} has been supplied from the tray supply unit 2, stops the operation by the tray supply unit 2 to supply the trays T of the subsequent lot.

This operation stopping unit 4c stops the operation by the tray pushing unit 22 to push out the tray T of the subsequent lot after the final tray T_{F} of the current lot has been pushed out. The operation stopping unit 4c of the present embodiment causes the operation by the tray pushing unit 22 to push out the tray T of the subsequent lot to remain stopped until the final tray T_{F} of the current lot has been conveyed to the egg supply unit 3, and the eggs E on the final tray T_{F} have been transferred by the egg supply unit 3 to the egg conveyor unit 11.

Here, the control device 4 also has a final tray tracking unit 4d that receives a detection signal from a tray sensor 24 such as, for example, an optical sensor or the like that is provided in the tray conveyor unit 23, and then tracks the fact that the final tray T_{F} has been conveyed to the egg supply unit 3.

Moreover, the control device 4 also has an end signal transmitting unit 4e that transmits to the sorting apparatus 10 an egg supply end signal which informs that the supplying of the eggs E of the current lot to the egg conveyor unit 11 has ended. As a result of receiving this egg supply end signal, the sorting apparatus 10 is able to differentiate between the eggs E of the current lot and the eggs E of the subsequent lot that are to be supplied next, and to tally up the respective totals.

### [Operation of the Egg Supply System 100]

An egg supply method performed using the egg supply system 100 of the present embodiment is described below. The operation performed using the egg supply system 100 of the present embodiment described below is performed as a result of the respective units being controlled by the control device 4.

The operator sequentially loads the equipment items R in which a plurality of trays T holding the eggs E have been placed onto the tray loading portion 21 (see FIG. 1). The tray pushing unit 22 then pushes a tray T from the equipment item R loaded on the tray loading portion 21 onto the tray conveyor unit 23. The tray T that has been pushed is conveyed to the egg supply unit 3, and the plurality of eggs E held on the tray T are then transferred to the egg conveyor unit 11 by the egg supply unit 3. Thereafter, the plurality of eggs E are conveyed by the egg conveyor unit 11 to the sorting apparatus 10, and after being sorted according to grade, they are stored in the automated warehouse 13 via a distribution gate 12.

Next, as is shown in FIG. 1, the operator actuates the final tray button 5 either immediately before or immediately after the final equipment item R_{F} which is holding lot currently being processed (i.e., the current lot) is loaded onto the tray loading portion 21. As a result of this, an actuation signal indicating that this is the final equipment item R_{F} (or the final tray T_{F}) is transmitted to the actuation signal receiving unit 4b of the control device 4.

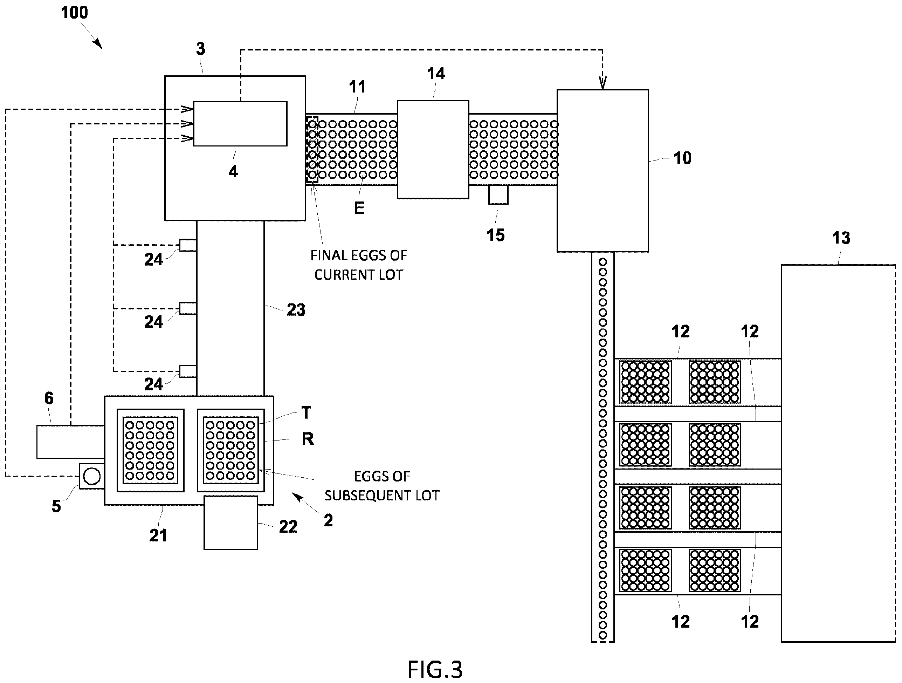

When the actuation signal receiving unit 4b receives the actuation signal, the control device 4 monitors the pushing operation performed by the tray pushing unit 22 and / or the tray T on the tray conveyor unit 23, and tracks the position of the final tray T_{F} using the final tray tracking unit 4d. During this tracking of the final tray T_{F}, in other words, from when the final tray T_{F} is pushed onto the tray conveyor unit 23 until this final tray T_{F} is conveyed to the egg supply unit 3, the operation stopping unit 4c transmits a stopping signal to the tray pushing unit 22 and thereby stops (i.e., prohibits) the pushing operation of the tray pushing unit 22 so as to prevent the subsequent tray T being pushed onto the tray conveyor unit 23 (see FIG. 3).

When the egg supply unit 3 has transferred the final egg E of the current lot to the egg conveyor unit 11 side, the operation stopping unit 4c of the control device 4 permits the tray pushing unit 22 to again perform a pushing operation. Note that, in a case in which a tray T (or equipment item R) of the subsequent lot has not been loaded onto the tray loading portion 21, then the operation of the tray pushing unit remains stopped.

At the same time as operation stopping unit 4c permits the pushing operation by the tray pushing unit 22, the end signal transmitting unit 4e of the control device 4 transmits a supply end signal to the sorting apparatus 10. As a result of this, a counting unit 4f of the control device 4 starts measuring the conveying distance of the egg conveyor unit 11 and prepares the supplying of the eggs E of the next lot. Note that, in a case in which the egg conveyor unit 11 is a roller conveyor, the counting unit 4f starts measuring the roller count value.

This roller count value is a value meaning how far a roller of the roller conveyor has advanced, and is obtained by using a conveyance sensor 15 such as a proximity sensor that detects a roller shaft to count a number of times a signal which is output when the roller shaft passes before the conveyance sensor 15 is output. Note that, instead of using a proximity sensor as the conveyance sensor 15, it is also possible to provide an encoder on a drive shaft of the roller conveyor, and to detect how far a roller of the roller conveyor has advanced using this encoder.

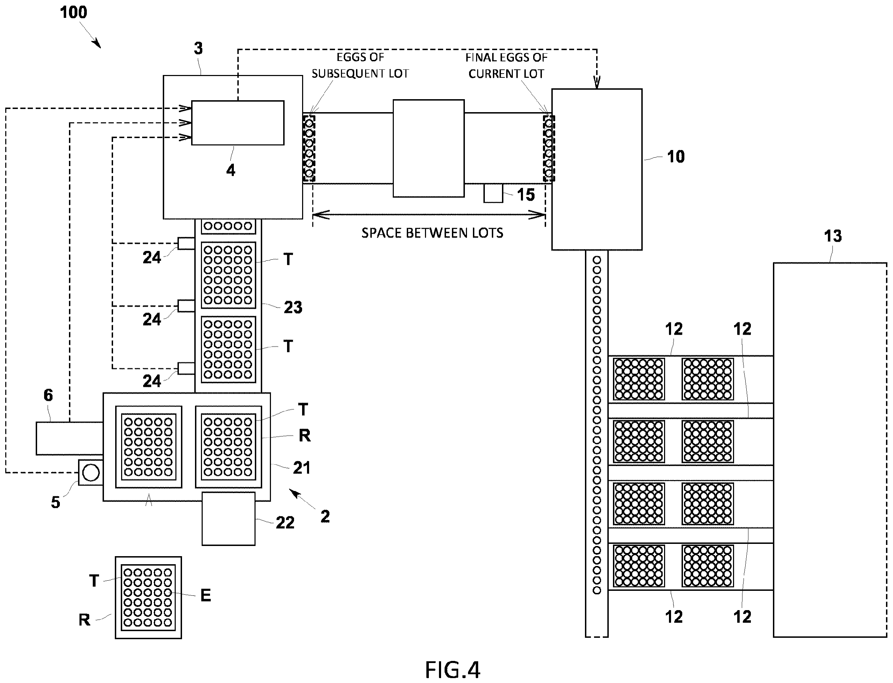

The control device 4 controls the egg supply unit 3 in accordance with a previously set roller count value so that, as is shown in FIG. 4, the supplying of the eggs E of the subsequent lot to the egg conveyor unit 11 is started after an appropriate space has been provided between the current lot and the subsequent lot. Note that, prior to the egg supply unit 3 starting to supply the eggs E of the subsequent lot, the tray T of the subsequent lot has already been conveyed to the egg supply unit 3 by the tray conveyor unit 23.

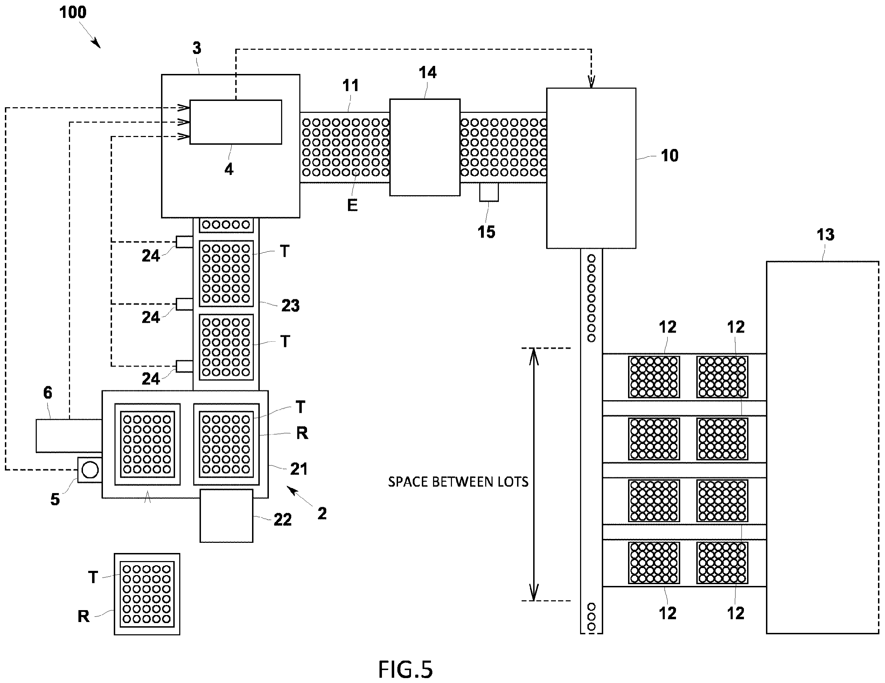

Here, " the timing when the supplying of the eggs E of the subsequent lot is started " is calculated backwards from " the space between " lots at the sorting apparatus 10 (see FIG. 5) so as to give " the space between lots " at the egg conveyor unit 11 (see FIG. 4). Here, " the space between " lots at the sorting apparatus 10 is large enough to ensure that the eggs E of the current lot do not enter the plurality of distribution gates 12 at the same time as the eggs E of the subsequent lot. The aforementioned timing can be calculated from the roller count value of the roller conveyor serving as the egg conveyor unit 11.

In the present embodiment, as is shown in FIG. 5, the sorting apparatus 10 is stopped in a state in which the eggs E of the subsequent lot have already arrived at the front of the distribution gates 12. The reason for this is that, if the distribution is started without any time lag when the operation of the sorting apparatus 10 is restarted, then efficiency is improved.

### [Effects Obtained from the Present Embodiment]

According to the egg supply system 100 of the present embodiment, an operation to switch lots that has conventionally been performed manually by an operator can be achieved simply by the operator actuating the final tray button 5 at the same time as the operator performs the necessary task of loading the final equipment item R_{F} (or the final tray T_{F}). Consequently, it is possible for a space to be provided between lots automatically by the control device 4 so that the respective lots can be differentiated from each other, and not only can the burden on the operator be alleviated, but it is also possible to ensure that the eggs E of different lots do not do not become mixed together. Moreover, as a result of the stopping of the supplying of eggs to the sorting apparatus 10 and the restarting of this supplying being performed automatically at an appropriate timing, it is possible to provide the necessary and appropriate space between lots.

Moreover, because the operation by the tray supply unit 2 to supply the tray T of the subsequent lot is stopped until the eggs E of the final tray T_{F} have been supplied to the egg conveyor unit 11, it is possible to provide a space between the lots simply by stopping the operation of the tray pushing unit 22.

Furthermore, because an egg supply end signal which informs that the supplying of the eggs E of the current lot to the egg conveyor unit 11 has ended is transmitted to the sorting apparatus 10, the sorting apparatus is able to automatically recognize that the current lot has ended (i.e., that the subsequent lot has started), so that the burden on the operator when performing tallying processing such as, for example, having to input a command to switch lots is alleviated.

In this way, in the egg supply system 100 of the present embodiment, in order to enable the sorting apparatus 10 to perform a stable tallying operation, it is possible to supply eggs E with a suitable space provided automatically between the current lot and the subsequent lot, so as to enable the processing of the subsequent lot to be started without any unnecessary wait time.

### [Variant Embodiments of the Present Invention]

Note that the present invention is not limited to the above-described embodiment.

For example, the control device 4 of the above-described embodiment controls both the tray supply unit 2 and the egg supply unit 3 so as to ensure that a predetermined space is provided between the eggs E of the current lot being supplied to the egg conveyor unit 11 and the eggs E of the subsequent lot to be supplied thereto, however, it is also possible for the control device 4 to control just one of the tray supply unit 2 and the egg supply unit 3 so as to ensure that a predetermined space is provided between the eggs E of the current lot being supplied to the egg conveyor unit 11 and the eggs E of the subsequent lot to be supplied thereto.

In a case in which the control device 4 controls the tray supply unit 2, after the final tray T_{F} has been supplied from the tray supply unit 2, by then stopping the operation by the tray supply unit 2 to supply the tray T of the subsequent lot, it is possible to provide a predetermined space between the eggs E of the current lot being supplied to the egg conveyor unit 11 and the eggs E of the subsequent lot to be supplied thereto. In this case, the egg supply unit 3 transfers the eggs E of a particular tray T to the egg conveyor unit 11 at the timing when that tray T has been conveyed by the tray conveyor unit 23.

In a case in which the control device 4 controls the egg supply unit 3, it is possible to consider a case in which the control device 4 detects that the final tray T_{F} has been supplied to the egg supply unit 3, and then controls the operation of the egg supply unit 3 so as to ensure that a predetermined space is provided between the eggs E of the current lot being supplied to the egg conveyor unit 11 and the eggs E of the subsequent lot to be supplied thereto.

Moreover, the space between the eggs E of the current lot and the eggs E of the subsequent lot in the egg conveyor unit 11 is not limited to that described in the foregoing embodiment, and it is only necessary that a space that enables the eggs E of the current lot to be differentiated in the sorting apparatus 10 from the eggs E of the subsequent lot be provided.

The sorting apparatus 10 that receives a supply end signal from the control device 4 may also be formed such that the final egg E of the current lot is tracked until it is conveyed to the sorting apparatus 10. In this case, this final egg E may be tracked using, for example, an optical sensor in the egg conveyor unit 11 that tracks the eggs E, or alternatively, the final egg E may be tracked from the distance it has been conveyed by the egg conveyance unit 11 obtained from the roller count value of the roller conveyor or the like.

Furthermore, instead of a structure in which the control device 4 transmits a supply end signal for the eggs of the current lot to the sorting apparatus 10, it is also possible to adopt a structure in which a supply start signal for the eggs of the subsequent lot is transmitted to the sorting apparatus 10. In this structure as well, it is possible to differentiate between, and separately tally, the eggs of the current lot and the eggs of the subsequent lot in the sorting apparatus 10.

In addition, it is also possible for the final tray notification unit 5 to be manifested as a function of a computer of a production management system or the like instead of as a final tray button that is pressed by an operator. For example, it is also possible for a production management system to be formed having a final tray notification unit 5 that dynamically determines, and notifies the control device 4, that a particular tray is the final tray in accordance with a predetermined production plan and production situation.

Furthermore, the tray supply unit of the above-described embodiment is formed having a tray loading portion, a tray pushing unit, and a tray conveyor unit, however, provided that a tray is able to be supplied to the egg supply unit, then another type of structure may instead be adopted.

In addition, various modifications of the embodiments may be made within the scope not deviating from the gist of the present invention.

### [Industrial Applicability]

According to the present invention, it is possible to alleviate the burden on an operator while preventing any decrease in the production efficiency.

### [Reference Signs List]

- 100: Egg Supply System
- E: Egg
- T: Tray
- T_{F}: Final Tray
- 10: Sorting Apparatus
- 11: Egg Conveyor unit
- 2: Tray Supply Unit
- 3: Egg Supply Unit
- 4: Control Device
- 4c: Operation Stopping Unit
- 4e: End Signal Transmitting Unit
- 5: Final Tray Notification Unit (Final Tray Button)

## Claims

1. An egg supply system that supplies eggs to an egg conveyor unit which conveys the eggs to a sorting apparatus, comprising:
a tray supply unit that supplies a tray holding a plurality of eggs to a subsequent step;
an egg supply unit that supplies eggs from the tray supplied by the tray supply unit to the egg conveyor unit;
a final tray notification unit that gives notification that the tray supplied from the tray supply unit is a final tray of a current lot; and
a control device that, in a case in which the final tray notification unit has given notification that a tray is the final tray of the current lot, receives that notification signal, and then ensures that a predetermined space is provided between the eggs of the current lot supplied to the egg conveyor unit and the eggs of the subsequent lot supplied thereto.

2. The egg supply system according to Claim 1, wherein the control device has an operation stopping unit that, after the final tray has been supplied from the tray supply unit, causes the operation performed by the tray supply unit to supply a tray for the subsequent lot to be stopped.

3. The egg supply system according to either of Claims 1 or 2, wherein the control device has an end signal transmitting unit that transmits an egg supply end signal which informs that the supplying of eggs from the current lot to the egg conveyor unit has ended to the sorting apparatus.
